# EUROPEAN PATENT APPLICATION

(11) **EP 4 002 527 A1**
(43) Date of publication of application: **25.05.2022**
(21) Application number: 20306411.8
(22) Date of filing: 19.11.2020
(51) Int. Cl.: H01M 8/04014, B64D 41/00, H01M 8/04029, H01M 8/04111, H01M 8/04119, H01M 8/04082, H01M 8/04291

(54) **ELECTRICAL GENERATING SYSTEM FOR AN AIRCRAFT COMPRISING A FUEL CELL**

(71) Applicant: Airbus Operations GmbH, 21129 Hamburg (DE)
(72) Inventor: KLEWER, Guido, 21129 HAMBURG (DE); HANCOCK, Kurtus, 21129 HAMBURG (DE); VREDENBORG, Enno, 21129 HAMBURG (DE)
(74) Representative: Cabinet Le Guen Maillet

(57) **Abstract**

The invention concerns an electrical generating system (200a) for an aircraft which comprises a fuel cell (202) with an anode (202a) and a cathode (202b), a hydrogen vessel (204) to feed the anode (202a), wherein the cathode (202b) is fed with air through a water injector (224) comprising a first and a second inlets and an outlet. The electrical generating system (200a) comprises an air/water separator (226), a transfer pipe (232) in which the oxygen depleted air is extracted from the cathode (202b) and where the fourth transfer pipe (232) is connected to the inlet of the air/water separator (226), a water circuit which retrieves the water at the second outlet of the air/water separator (226) and sends it at the second inlet of the water injector (224), wherein the water circuit comprises a pumped water pipe (274) with a water pump (276) arranged to move the water towards the second inlet of the water injector (224),

The control of the water pump permits a better control of the humidity of the air arriving at the cathode.

## Description

### TECHNICAL FIELD

The present invention concerns an electrical generating system for an aircraft, wherein said system comprises a fuel cell. The present invention concerns also an aircraft comprising such electrical generating system.

### TECHNICAL BACKGROUND

In order to fly, an aircraft comprises propulsion systems, each comprising an electric motor and a propeller. The motor generates a rotary motion that is transmitted to the propeller. To power the electric motor, it is known to use fuel cells.

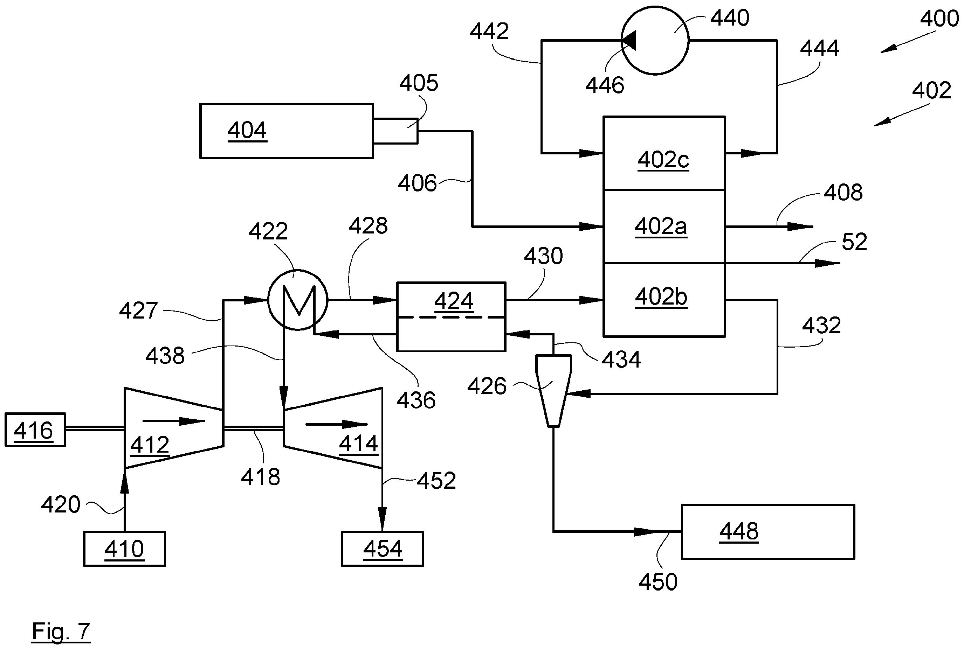

Fig. 7 shows an electrical generating system 400 according to the state of the art. The electrical generating system 400 comprises a fuel cell 402 with an anode 402a and a cathode 402b. The fuel cell 402 comprises also a cooling part 402c to cool the anode 402a and the cathode 402b.

The electrical generating system 400 comprises a cooling circuit comprising a cooling vessel 440 in which a coolant fluid is cooled, an inlet pipe 442 fluidly connected between an outlet of the cooling vessel 440 and the cooling part 402c and an outlet pipe 444 fluidly connected between the cooling part 402c and an inlet of the cooling vessel 440. The cooling circuit comprises also a pump 446 arranged to move the coolant fluid in the cooling circuit from the cooling vessel 440 to the inlet pipe 442, then to the cooling part 402c, then to the outlet pipe 444 and finally to the cooling vessel 440.

A set of electrical wires 52 is electrically powered by the fuel cell 402 to electrically power an electrical load, as the electric motor of the propulsion system.

The electrical generating system 400 comprises a hydrogen vessel 404 in which liquid hydrogen is stored. The hydrogen vessel 404 comprises a discharge plug 405 through which the hydrogen flows out of the hydrogen vessel 404.

The electrical generating system 400 comprises a first supply pipe 406 fluidly connected between the discharge plug 405 and the inlet of the anode 402a and a first reject pipe 408 fluidly connected to the outlet of the anode 402a and in which the hydrogen not consumed by the anode 402a is extracted from the anode 402a.

The electrical generating system 400 comprises a scoop 410 in the skin of the aircraft to draw air from the atmosphere.

The electrical generating system 400 comprises an air treatment system to treat the air drawn by the scoop 410 before sending it to the inlet of the cathode 402b.

The air treatment system comprises a compressor 412, a turbine 414 and an additional electrical motor 416 which drives the rotating parts of the compressor 412. The rotating parts of the turbine 414 are linked to the rotating parts of the compressor 412 by a drive shaft 418.

The electrical generating system 400 comprises a second supply pipe 420 fluidly connected between the scoop 410 and the inlet of the compressor 412.

The air treatment system comprises also a heat exchanger 422, a humidifier 424 and an air/water separator 426. Typically, the heat exchanger 422 comprises a first and a second inlets, as well as a first and a second outlets. Typically, the humidifier 424 comprises a first and a second inlets, as well as a first and a second outlets. Typically, the air/water separator 426 comprises an inlet, as well as a first outlet for the air and a second outlet for the water.

The air treatment system comprises also a first transfer pipe 427 fluidly connected between the outlet of the compressor 412 and the first inlet of the heat exchanger 422, a second transfer pipe 428 fluidly connected between the first outlet of the heat exchanger 422 and the first inlet of the humidifier 424 and a third transfer pipe 430 fluidly connected between the outlet of the humidifier 424 and the inlet of the cathode 402b.

The electrical generating system 400 comprises also a fourth transfer pipe 432 fluidly connected to the outlet of the cathode 402b and in which the oxygen depleted air is extracted from the cathode 402b and where the fourth transfer pipe 432 is fluidly connected to the inlet of the air/water separator 426.

The electrical generating system 400 comprises also a fifth transfer pipe 434 fluidly connected between the first outlet of the air/water separator 426 and the second inlet of the humidifier 424, a sixth transfer pipe 436 fluidly connected between the second outlet of the humidifier 424 and the second inlet of the heat exchanger 422, a seventh transfer pipe 438 fluidly connected between the second outlet of the heat exchanger 422 and the inlet of the turbine 414. Then, the oxygen depleted air flowing from the cathode 402b drives the rotating parts of the turbine 414 in rotation. The rotating parts of the compressor 412 are driven in rotation mainly thanks to the additional electrical motor 416 and additionally thanks to the turbine 414 and the drive shaft 418.

The electrical generating system 400 comprises also a water vessel 448 and a water pipe 450 fluidly connected between the second outlet of the air/water separator 426 and the water vessel 448.

The humidifier 424 realizes a water transfer from the air flowing from the air/water separator 426 towards the air flowing from the heat exchanger 422.

The electrical generating system 400 comprises also a second reject pipe 452 fluidly connected between the output of the turbine 414 and an air outlet 454.

The humidifier uses the humidified air coming from the cathode as source of humidity, and even if this arrangement is working well, it is necessary to improve the efficiency of the fuel cell with a better control of the humidity of the air arriving on the cathode 402b.

### SUMMARY OF THE INVENTION

An object of the present invention is to provide an electrical generating system for an aircraft, in which the humidity of the air arriving on the cathode is well controlled.

For this purpose, an electrical generating system for an aircraft is proposed, this electrical generating system is used with an aircraft comprising an electric motor, a propeller driven in rotation by the electric motor, and electrical wires electrically powering the electric motor. The electrical generating system comprises:
- a hydrogen vessel in which hydrogen is stored,
- a fuel cell with an anode, a cathode and a cooling part to cool the anode and the cathode, and where the fuel cell is intended to electrically power said electrical wires,
- a hydrogen circuit fluidly connected between the hydrogen vessel and the inlet of the anode,
- an air inlet drawing air from the atmosphere,
- a water injector comprising a first and a second inlets, as well as an outlet,
- an air/water separator comprising an inlet, as well as a first outlet for the air and a second outlet for the water,
- a first air circuit which retrieves air at the air inlet and sends it at the first inlet of the water injector,
- a second air circuit fluidly connected between the outlet of the water injector and the inlet of the cathode,
- a cathode outlet circuit in which the oxygen depleted air is extracted from the cathode and where the cathode outlet circuit is fluidly connected to the inlet of the air/water separator,
- a water circuit which retrieves the water at the second outlet of the air/water separator and sends it at the second inlet of the water injector, wherein the water circuit comprises a pumped water pipe with a water pump arranged to move the water towards the second inlet of the water injector, and
- a control unit which controls the water pump.

The control of the water pump permits a better control of the humidity of the air arriving at the cathode.

Advantageously, the water circuit comprises a water vessel arranged on the pumped water pipe upstream of the water pump.

Advantageously, the cathode outlet circuit comprises a first condenser comprising a first and a second inlets, as well as a first and a second outlets, a first pipe fluidly connected between the outlet of the cathode and the first inlet of the first condenser, and a second pipe fluidly connected between the first outlet of the first condenser and the inlet of the air/water separator, and the electrical generating system comprises also a cooling circuit arranged to send a coolant fluid at the inlet of the cooling part and to retrieve the coolant fluid at the outlet of the cooling part to cool it, and to send the coolant fluid at the second inlet of the first condenser and to retrieve the coolant fluid at the second outlet of the first condenser.

According to an embodiment; the cooling circuit comprises:
- a cooling vessel in which a coolant is cooled,
- an inlet pipe fluidly connected between an outlet of the cooling vessel and the inlet of the cooling part,
- an outlet pipe fluidly connected between the outlet of the cooling part and an inlet of the cooling vessel,
- a pump arranged to move the coolant fluid,
- a prolongation pipe fluidly connected between the inlet pipe and the second inlet of the first condenser, and
- a return pipe fluidly connected between the second outlet of the first condenser and the outlet pipe.

According to another embodiment, the hydrogen vessel comprises a discharge plug through which the hydrogen flows out of the hydrogen vessel, the electrical generating system further comprises a bypass pipe which is fluidly connected between the cooling circuit and the second inlet of the first condenser and which crosses the discharge plug, and a return pipe fluidly connected between the second outlet of the first condenser and the cooling circuit.

Advantageously, the cathode outlet circuit comprises a second condenser with a first and a second inlets, as well as a first and a second outlets, a first sub-pipe fluidly connected between the first outlet of the first condenser and the first inlet of the second condenser, and a second sub-pipe fluidly connected between the first outlet of the second condenser and the inlet of the air/water separator, and wherein the third transfer pipe goes through the second condenser between the second inlet and the second outlet of the second condenser.

The invention proposes also an aircraft comprising an electric motor, a propeller driven in rotation by the electric motor, electrical wires electrically powering the electric motor, and an electrical generating system according to one of the previous embodiments, wherein the fuel cell electrically powers said electrical wires.

### BRIEF DESCRIPTION OF THE DRAWINGS

The aforementioned characteristics of the invention, as well as others, will become more apparent by reading the following description of an embodiment, the said description being provided in relation with the appended drawings, in which:
Fig. 1 is a perspective view of an aircraft according to the invention,
Fig. 2 is a schematic view of an electrical generating system used in the aircraft according to a first embodiment of the invention,
Fig. 3 is a schematic view of an electrical generating system used in the aircraft according to a second embodiment of the invention,
Fig. 4 is a schematic view of an electrical generating system used in the aircraft according to a third embodiment of the invention,
Fig. 5 is a schematic view of an electrical generating system used in the aircraft according to a fourth embodiment of the invention,
Fig. 6 is a schematic view of an electrical generating system used in the aircraft according to a fifth embodiment of the invention, and
Fig. 7 is a schematic view of an electrical generating system according to the state of the art.

### DETAILED DESCRIPTION OF EMBODIMENTS

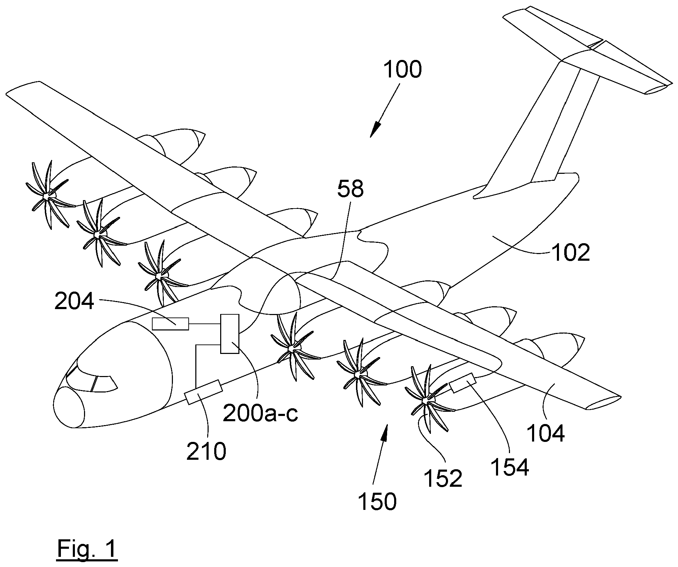

Fig. 1 represents an aircraft 100 comprising a fuselage 102 and two wings 104 disposed on each side of the fuselage 102. Under each wing 104, the aircraft 100 comprises at least one propulsion system 150. Each propulsion system 150 has a propeller 152 and an electric motor 154, the output shaft of which drives the propeller 152 in rotation.

The electric motor 154 is electrically powered by an electrical generating system 200a-e according to the invention.

In the embodiment shown on Fig. 1, the electrical generating system 200a-e is arranged in the fuselage 102, but it can be arranged in the wing 104 or in the propulsion system 150. In the same way, there is one electrical generating system 200a-e for one electric motor 154 or for several electric motors 154.

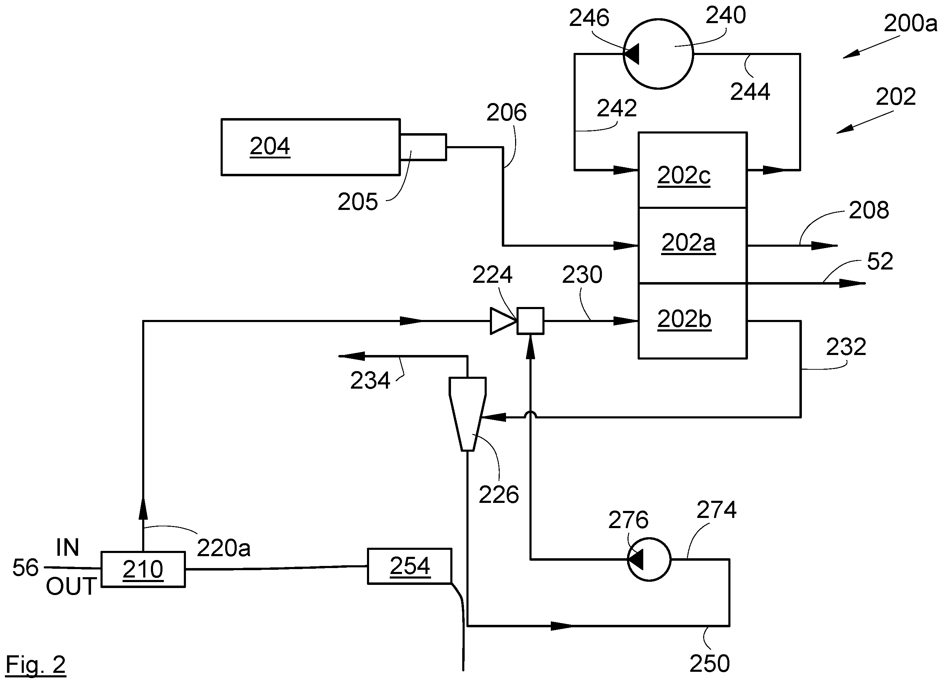

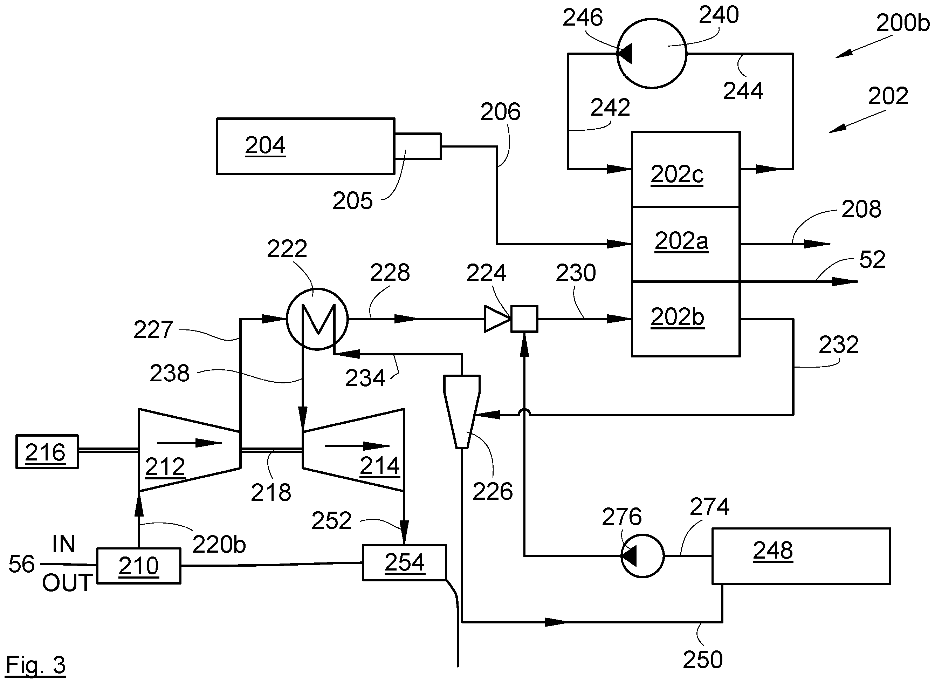

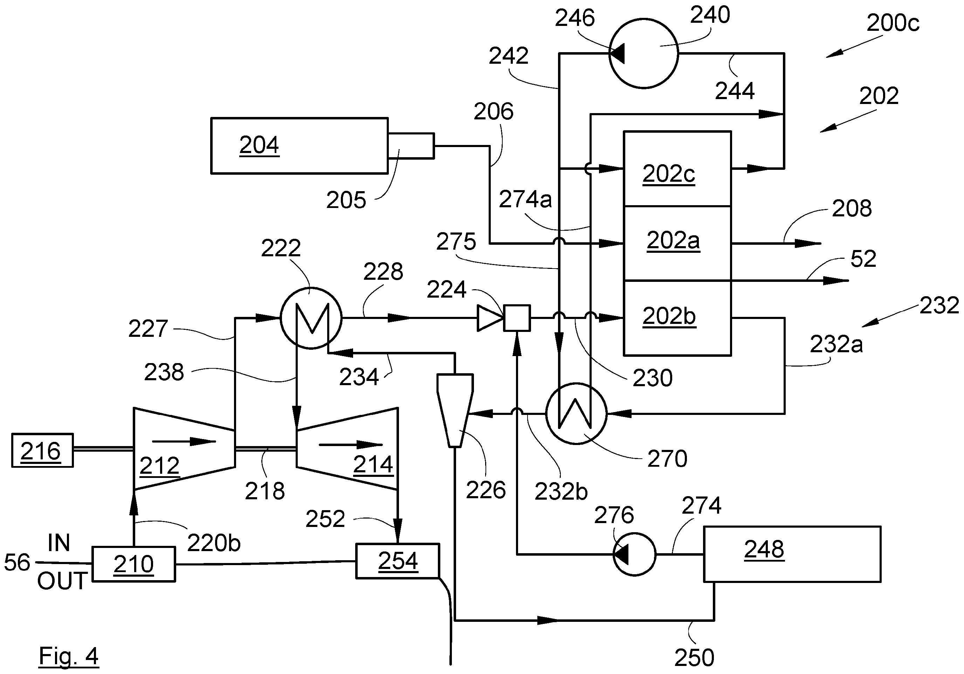

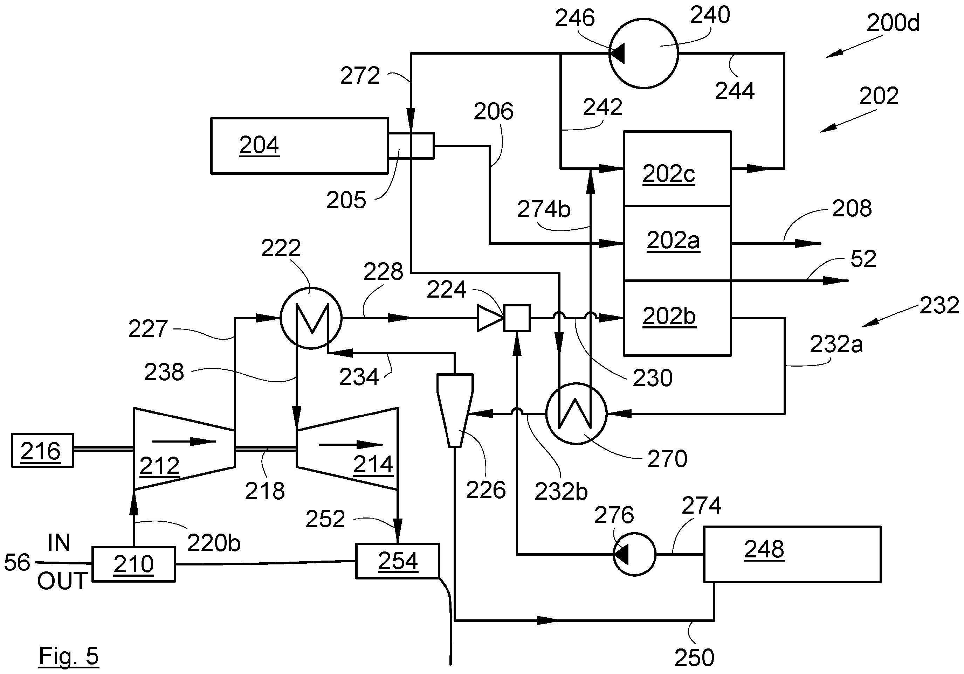

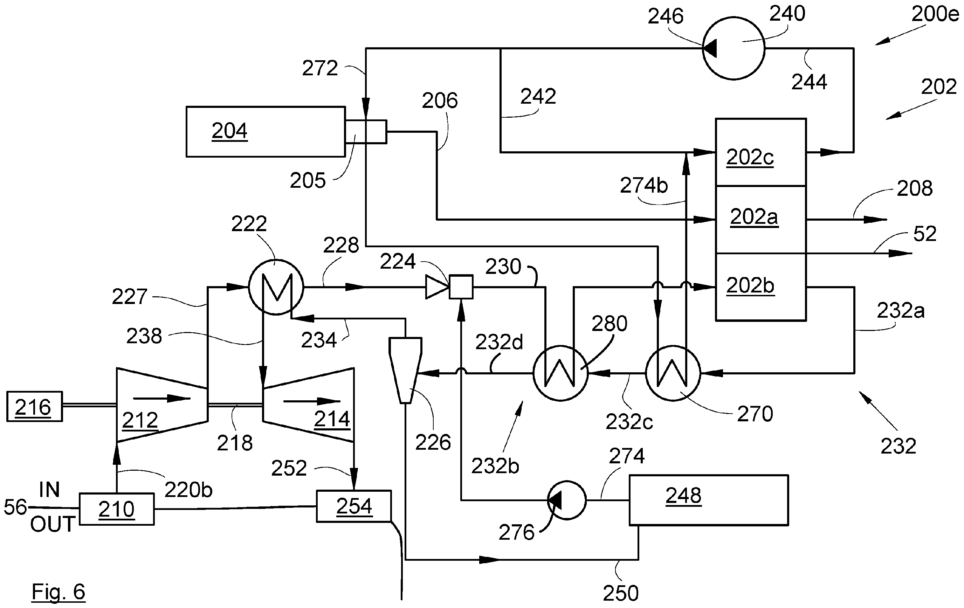

Fig. 2 is an electrical generating system 200a according to a first embodiment of the invention, Fig. 3 is an electrical generating system 200b according to a second embodiment of the invention, Fig. 4 is an electrical generating system 200c according to a third embodiment of the invention, Fig. 5 is an electrical generating system 200d according to a fourth embodiment of the invention, and Fig. 6 is an electrical generating system 200e according to a fifth embodiment of the invention. The elements which are common for the five embodiments have the same references.

The electrical generating system 200a-e comprises a fuel cell 202 with an anode 202a and a cathode 202b. The fuel cell 202 comprises also a cooling part 202c to cool the anode 202a and the cathode 202b.

A fuel cell is an electrochemical cell that converts the chemical energy of a fuel (here hydrogen) and an oxidizing agent (here oxygen) into electricity through a pair of redox reactions.

The electrical generating system 200a-e is implemented in an aircraft 100 and the line with the reference 56 shows the skin of the aircraft 100 separating the inside (In) from the outside (Out) of the aircraft 100.

The electrical generating system 200a-e comprises a cooling circuit which comprises here a cooling vessel 240 in which a coolant fluid is cooled, an inlet pipe 242 fluidly connected between an outlet of the cooling vessel 240 and the inlet of the cooling part 202c and an outlet pipe 244 fluidly connected between the outlet of the cooling part 202c and an inlet of the cooling vessel 240. The cooling circuit comprises also a pump 246 arranged to move the coolant fluid in the cooling circuit from the cooling vessel 240 to the inlet pipe 242, then to the cooling part 202c, then to the outlet pipe 244 and finally to the cooling vessel 240.

In a general manner, the cooling circuit is arranged to send the coolant fluid at the inlet of the cooling part 202c and to retrieve the coolant fluid at the outlet of the cooling part 202c to cool it.

A set of electrical wires 52 is electrically powered by the fuel cell 202 to electrically power an electrical load, as the electric motor 154 of the propulsion system 150.

The electrical generating system 200a-e comprises a hydrogen vessel 204 in which hydrogen is stored. In a preferred embodiment, hydrogen stored in the hydrogen vessel 204 is liquid hydrogen.

The electrical generating system 200a-e comprises a hydrogen circuit fluidly connected between the hydrogen vessel 204 and the inlet of the anode 202a.

In the present embodiments, the hydrogen circuit comprises a discharge plug 205 through which the hydrogen flows out of the hydrogen vessel 204 and a first supply pipe 206 fluidly connected between the discharge plug 205 and the inlet of the anode 202a.

The electrical generating system 200a-e comprises a first reject pipe 208 fluidly connected to the outlet of the anode 202a and in which the hydrogen not consumed by the anode 202a is extracted from the anode 202a.

The electrical generating system 200a-e comprises an air inlet 210, typically a scoop in the skin 56 of the aircraft 100, to draw air from the atmosphere.

The electrical generating system 200a-e comprises an air treatment system to treat the air drawn by the air inlet 210 before sending it to the inlet of the cathode 202b.

In the first embodiment of Fig. 2, the air treatment system comprises a water injector 224 and an air/water separator 226. Typically, the water injector 224 comprises a first and a second inlets, as well as an outlet. Typically, the air/water separator 226 comprises an inlet, as well as a first outlet for the air and a second outlet for the water.

The air treatment system comprises a first air circuit which retrieves air at the air inlet 210 and sends it at the first inlet of the water injector 224.

In the embodiment of Fig. 2, the first air circuit comprises a second supply pipe 220a fluidly connected between the air inlet 210 and the first inlet of the water injector 224.

In all embodiments, the electrical generating system 200a-e comprises a second air circuit fluidly connected between the outlet of the water injector 224 and the inlet of the cathode 202b in the different embodiments, the second air circuit comprises a third transfer pipe 230.

In the other embodiments (Figs. 3 to 6), the first air circuit comprises also a compressor 212, a turbine 214 and an additional electrical motor 216 which drives the rotating parts of the compressor 212. The rotating parts of the turbine 214 are linked to the rotating parts of the compressor 212 by a drive shaft 218. The first air circuit comprises a second supply pipe 220b fluidly connected between the air inlet 210 and the inlet of the compressor 212. The first air circuit comprises also a heat exchanger 222 which comprises a first and a second inlets, as well as a first and a second outlets. The first air circuit comprises also a first transfer pipe 227 fluidly connected between the outlet of the compressor 212 and the first inlet of the heat exchanger 222, a second transfer pipe 228 fluidly connected between the first outlet of the heat exchanger 222 and the first inlet of the water injector 224.

In the embodiments of Figs 3 to 6, the air treatment system can be the same as the air treatment system of Fig. 2.

The electrical generating system 200a-e comprises also a cathode outlet circuit 232 fluidly connected to the outlet of the cathode 202b and in which the oxygen depleted air is extracted from the cathode 202b and where the cathode outlet circuit 232 is fluidly connected to the inlet of the air/water separator 226.

In the embodiments of Figs 2 and 3, the cathode outlet circuit 232 comprises a fourth transfer pipe 232 fluidly connected between the outlet of the cathode 202b and the inlet of the air/water separator 226.

The electrical generating system 200a-e comprises also a fifth transfer pipe 234 fluidly connected at the first outlet of the air/water separator 226. In the embodiments of Figs. 3 to 6, the fifth transfer pipe 234 is fluidly connected between the first outlet of the air/water separator 226 and the second inlet of the heat exchanger 222.

In the embodiments of Figs. 3 to 6, a sixth transfer pipe 238 is fluidly connected between the second outlet of the heat exchanger 222 and the inlet of the turbine 214. Then, the oxygen depleted air flowing from the cathode 202b drives the rotating parts of the turbine 214 in rotation. The rotating parts of the compressor 212 are driven in rotation mainly thanks to the additional electrical motor 216 and additionally thanks to the turbine 214 and the drive shaft 218.

In the embodiments of Figs. 3 to 6, the electrical generating system 200b-e comprises also a second reject pipe 252 fluidly connected between the output of the turbine 214 and an air outlet 254, typically a scoop in the skin 56 of the aircraft 100.

The electrical generating system 200a-e comprises also a water circuit which retrieves the water at the second outlet of the air/water separator 226 and sends it at the second inlet of the water injector 224.

At this end, the water circuit comprises a pumped water pipe 274 fluidly connected between the second outlet of the air/water separator 226 and the second inlet of the water injector 224 and on which a water pump 276 is arranged to move the water towards the second inlet of the water injector 224.

In the embodiments of Figs 3 to 6, the water circuit comprises a water vessel 248 arranged on the pumped water pipe 274 upstream of the water pump 276. To this end, the pumped water pipe 274 is divided in two parts with a water pipe 250 fluidly connected between the second outlet of the air/water separator 226 and the water vessel 248. The water generated by the air/water separator 226 is then stored in the water vessel 248. In the embodiments of Figs 3 to 6, the water circuit can be the same as the water circuit of Fig. 2.

In all embodiments, the water arriving at the second inlet of the water injector 224 is sprayed in the air coming from the air inlet 210 directly or through the heat exchanger 222.

The control of the water pump 276 permits a better control of the amount of water injected in the air and a better control of the humidity of the air arriving at the inlet of the cathode 202b.

A control unit controls the pump 246, the water pump 276 and the additional electrical motor 216.

In the embodiment of Fig. 2, the air coming from the air inlet 210 flows through the water injector 224 to arrive to the inlet of the cathode 202b. The oxygen depleted air flows successively through the outlet of the cathode 202b and the air/water separator 226. The water separated in the air/water separator 226 flows from the air/water separator 226 to the water injector 224 thanks to the water pump 276.

In the embodiments of Figs 3 to 6, the air coming from the air inlet 210 flows successively through the compressor 212, the heat exchanger 222, the water injector 224 to arrive to the inlet of the cathode 202b. The oxygen depleted air flows successively through the outlet of the cathode 202b, the air/water separator 226, the heat exchanger 222, the turbine 214 and the air outlet 254. The water separated in the air/water separator 226 flows from the air/water separator 226 through the water vessel 248, and then, thanks to the water pump 276, the water flows in the water injector 224.

In the embodiments of Figs. 4 to 6, the cathode outlet circuit 232 comprises a first condenser 270 comprising a first and a second inlets, as well as a first and a second outlets and arranged on the fourth transfer pipe 232, a first pipe 232a fluidly connected between the outlet of the cathode 202b and the first inlet of the first condenser 270, and a second pipe 232b fluidly connected between the first outlet of the first condenser 270 and the inlet of the air/water separator 226.

The cooling circuit is also arranged to send the coolant fluid at the second inlet of the first condenser 270 and to retrieve the coolant fluid at the second outlet of the first condenser 270.

In the embodiment of Fig. 4, the cooling circuit comprises a return pipe 274a fluidly connected between the second outlet of the first condenser 270 and the outlet pipe 244 to retrieve the coolant fluid from the first condenser 270.

In the embodiments of Figs. 5 and 6, the cooling circuit comprises a return pipe 274b fluidly connected between the second outlet of the first condenser 270 and the inlet pipe 242 to retrieve the coolant fluid from the first condenser 270.

In the embodiment of Fig. 4, the cooling circuit comprises a prolongation pipe 275 fluidly connected between the inlet pipe 242 and the second inlet of the first condenser 270.

In the embodiment of Figs. 5 and 6, the cooling circuit does not comprise the prolongation pipe 275, but the electrical generating system 200d-e comprises a bypass pipe 272 which is fluidly connected between the cooling circuit, and more particularly the outlet of the cooling vessel 240, and the second inlet of the first condenser 270 and which crosses the discharge plug 205.

The bypass pipe 272 guides the coolant fluid through the discharge plug 205 and the coolant fluid is then more cooled by the liquid hydrogen flowing around the bypass pipe 272, and the coolant fluid thus cooled is used in the first condenser 270 to improve the condensation of the water.

The first condenser 270 realizes a condensation of the water contained in the air flowing from the cathode 202b and then there is more water separated in the air/water separator 226 and then more water to humidify the air at the inlet of the cathode 202b.

The coolant fluid returns to cooling vessel 240 through the return pipe 274b which is fluidly connected between the second outlet of the first condenser 270 and the cooling circuit and more particularly to the inlet pipe 242 downstream of the bypass pipe 272.

In all embodiments, the pump 246 moves the coolant fluid also through the bypass pipe 272 and the return pipe 274a-b.

In the embodiment of Fig. 6, the cathode outlet circuit 232 comprises also a second condenser 280 comprising a first and a second inlets, as well as a first and a second outlets and arranged on the second pipe 232b, a first sub-pipe 232c fluidly connected between the first outlet of the first condenser 270 and the first inlet of the second condenser 280, and a second sub-pipe 232d fluidly connected between the first outlet of the second condenser 280 and the inlet of the air/water separator 226.

At the same time, the third transfer pipe 230 goes through the second condenser 280 between the second inlet and the second outlet of the second condenser 280, it means that the third transfer pipe 230 is fluidly connected between the outlet of the water injector 224 and the second inlet of the second condenser 280, and the third transfer pipe 230 is fluidly connected between the second outlet of the second condenser 280 and the inlet of the cathode 202b.

The second condenser 280 is refreshed by means of the humidified air sent to the inlet of the cathode 202b. It permits to condensate more water from the air coming from the outlet of the cathode 202b and then to have a higher volume of water available for humidifying the air at the inlet of the cathode 202b.

The second condenser 280 can also be implemented in the embodiments of Figs. 4 and 5.

## Claims

1. Electrical generating system (200a-e) for an aircraft (100) comprising an electric motor (154), a propeller (152) driven in rotation by the electric motor (154) and electrical wires (52) electrically powering the electric motor (154), wherein said electrical generating system (200a-e) comprises:
- a hydrogen vessel (204) in which hydrogen is stored,
- a fuel cell (202) with an anode (202a), a cathode (202b) and a cooling part (202c) to cool the anode (202a) and the cathode (202b), and where the fuel cell (202) is intended to electrically power said electrical wires (52),
- a hydrogen circuit (205, 206) fluidly connected between the hydrogen vessel (204) and the inlet of the anode (202a),
- an air inlet (210) drawing air from the atmosphere,
- a water injector (224) comprising a first and a second inlets, as well as an outlet,
- an air/water separator (226) comprising an inlet, as well as a first outlet for the air and a second outlet for the water,
- a first air circuit which retrieves air at the air inlet (210) and sends it at the first inlet of the water injector (224),
- a second air circuit (230) fluidly connected between the outlet of the water injector (224) and the inlet of the cathode (202b),
- a cathode outlet circuit (232) in which the oxygen depleted air is extracted from the cathode (202b) and where the cathode outlet circuit (232) is fluidly connected to the inlet of the air/water separator (226),
- a water circuit which retrieves the water at the second outlet of the air/water separator (226) and sends it at the second inlet of the water injector (224), wherein the water circuit comprises a pumped water pipe (274) with a water pump (276) arranged to move the water towards the second inlet of the water injector (224), and
- a control unit which controls the water pump (276).

2. Electrical generating system (200b-e) according to claim 1, wherein the water circuit comprises a water vessel (248) arranged on the pumped water pipe (274) upstream of the water pump (276).

3. Electrical generating system (200c-e) according to claim 1 or 2, wherein the cathode outlet circuit (232) comprises a first condenser (270) comprising a first and a second inlets, as well as a first and a second outlets, a first pipe (232a) fluidly connected between the outlet of the cathode (202b) and the first inlet of the first condenser (270), and a second pipe (232b) fluidly connected between the first outlet of the first condenser (270) and the inlet of the air/water separator (226), and wherein the electrical generating system (200c-e) comprises also a cooling circuit arranged to send a coolant fluid at the inlet of the cooling part (202c) and to retrieve the coolant fluid at the outlet of the cooling part (202c) to cool it, and to send coolant fluid at the second inlet of the first condenser (270) and to retrieve the coolant fluid at the second outlet of the first condenser (270).

4. Electrical generating system (200c) according to claim 3, wherein the cooling circuit comprises:
- a cooling vessel (240) in which a coolant fluid is cooled,
- an inlet pipe (242) fluidly connected between an outlet of the cooling vessel (240) and the inlet of the cooling part (202c),
- an outlet pipe (244) fluidly connected between the outlet of the cooling part (202c) and an inlet of the cooling vessel (240),
- a pump (246) arranged to move the coolant fluid,
- a prolongation pipe (275) fluidly connected between the inlet pipe (242) and the second inlet of the first condenser (270), and
- a return pipe (274a) fluidly connected between the second outlet of the first condenser (270) and the outlet pipe (244).

5. Electrical generating system (200d-e) according to claim 3, wherein:
- the hydrogen vessel (204) comprises a discharge plug (205) through which the hydrogen flows out of the hydrogen vessel (204),
- the electrical generating system (200d-e) further comprises a bypass pipe (272) which is fluidly connected between the cooling circuit and the second inlet of the first condenser (270) and which crosses the discharge plug (205), and
- a return pipe (274b) fluidly connected between the second outlet of the first condenser (270) and the cooling circuit.

6. Electrical generating system (200c-e) according to any of claims 3 to 5, wherein the cathode outlet circuit (232) comprises a second condenser (280) with a first and a second inlets, as well as a first and a second outlets, a first sub-pipe (232c) fluidly connected between the first outlet of the first condenser (270) and the first inlet of the second condenser (280), and a second sub-pipe (232d) fluidly connected between the first outlet of the second condenser (280) and the inlet of the air/water separator (226), and wherein the third transfer pipe (230) goes through the second condenser (280) between the second inlet and the second outlet of the second condenser (280).

7. Aircraft (100) comprising an electric motor (154), a propeller (152) driven in rotation by the electric motor (154), electrical wires (52) electrically powering the electric motor (154), and an electrical generating system (200a-e) according to one of the claims 1 to 6, wherein the fuel cell (202) electrically powers said electrical wires (52).
